# EUROPÄISCHE PATENTSCHRIFT

(11) **EP 3 830 451 B1**
(45) Veröffentlichungstag und Bekanntmachung des Hinweises auf die Patenterteilung: **07.09.2022**
(21) Anmeldenummer: 19745050.5
(22) Anmeldetag: 19.07.2019
(51) Int. Cl.: F16H 57/04, F16H 57/08

(54) **GETRIEBE MIT ZUMINDEST EINER PLANETENGETRIEBESTUFE**
GEARBOX HAVING AT LEAST ONE PLANETARY GEAR STAGE
BOÎTE DE VITESSE DOTÉE D'AU MOINS UN ENGRENAGE PLANÉTAIRE

(30) Priorität: 31.07.2018 DE 102018005985
(43) Veröffentlichungstag der Anmeldung: 09.06.2021
(60) Teilanmeldung: 22000010.3
(73) Patentinhaber: SEW-EURODRIVE GmbH & Co. KG, 76646 Bruchsal (DE)
(72) Erfinder: RODARTE, Rafael, 13340-350 Indaiatuba-SP (BR); VIEIRA, Antonio, Ventriglia, 13320-370 Salto-SP (BR)
(86) Internationale Anmeldenummer: PCT/EP2019/025241
(87) Internationale Veröffentlichungsnummer: WO 2020/025166

(56) Entgegenhaltungen:
- WO-A1-2016/180512
- WO-A1-2018/065012
- CN-B- 102 705 494
- US-A1- 2016 146 102

## Beschreibung

Die Erfindung betrifft ein Getriebe mit zumindest einer Planetengetriebestufe.

Bei Planetengetrieben ist bekannt, dass Planetenräder über Planetenbolzen drehbar gelagert im Planetenträger aufgenommen sind, der selbst wiederum drehbar gelagert in einem Gehäuseteil des Getriebes ist.

Aus der JP H06- 47764 U ist ein Getriebe mit einer Planetengetriebestufe bekannt.

Aus der JP H10- 318356 A ist ein Getriebe bekannt.

Aus der CN 102 705 494 A ist als nächstliegender Stand der Technik ebenfalls ein Planetengetriebe bekannt.

Aus der DE 10 2012 012 098 A1 ist ein Planetensteg zur Verbindung zweier Planetenstegwangen bekannt.

Aus der JP H07- 332 475 A ist ein Planetenträger eines Planetengetriebes bekannt.

Aus der US 5 472 383 A ist ein Schmiersystem für ein Planetengetriebe bekannt.

Aus der US 2016/0208905 A ist eine Planetengetriebeanordnung bekannt.

Aus der US 2016/0146102 A1 ist eine Gasturbine bekannt.

Aus der WO 2016 /180512 A1 ist ein Getriebe mit einer in einem Flanschteil mittels eines Lagers gelagerten eintreibenden Welle bekannt.

Aus der WO 2018 / 065012 A1 ist ein lastorientiert gestalteter Planetenträger mit kooperierenden Einbuchtungen am Verbindungsstück und Aussparungen an Trägerwangen bekannt.

Der Erfindung liegt daher die Aufgabe zugrunde, ein Getriebe weiterzubilden, wobei der Betrieb effizient weitergebildet werden soll. Insbesondere sollen Verluste auch bei dynamischem Betrieb reduziert werden.

Erfindungsgemäß wird die Aufgabe bei dem Getriebe nach den in Anspruch 1 angegebenen Merkmalen gelöst.

Wichtige Merkmale der Erfindung bei dem Getriebe mit zumindest einer Planetengetriebestufe sind, dass die Planetengetriebestufe einen zweiwangigen Planetenträger aufweist,
wobei die erste Wange des Planetenträgers mit der zweiten Wange des Planetenträgers mittels Stegbereichen verbunden ist,
insbesondere wobei die erste Wange und die zweite Wange voneinander axial, insbesondere also parallel zur Drehachsrichtung des Planetenträgers, beabstandet sind,
insbesondere wobei die Stegbereiche in Umfangsrichtung voneinander regelmäßig beabstandet sind,
wobei in dem in Umfangsrichtung von einem jeweiligen Stegbereich überdeckten jeweiligen Winkelbereich jeweils ein Fördermittel, insbesondere Zelle, angeordnet ist, insbesondere am jeweiligen Stegbereich nach radial innen hervorragend angeformt ist.

**Erfindungsgemäß** weist das jeweilige Fördermittel eine jeweilige Tragwand und jeweilige Schaufelbereiche auf,
wobei die jeweilige Tragwand an einen der Stegbereiche angeformt ist und sich ausgehend vom Stegbereich nach radial innen erstreckt,
wobei die jeweiligen Schaufelbereiche beabstandet sind vom jeweiligen Stegbereich und an die Tragwand angeformt sind, wobei sich ein erster Schaufelbereich des jeweiligen Fördermittels in Umfangsrichtung erstreckt, insbesondere auskragt, und ein zweiter Schaufelbereich des jeweiligen Fördermittels entgegen der Umfangsrichtung sich erstreckt, insbesondere auskragt. Von Vorteil ist dabei, dass in beiden Drehrichtungen des Planetenträgers Öl aus dem Ölsumpf aufgenommen und empor gefördert wird, so dass dann unter Ausnutzung der Gravitation eine Schmierung der Verzahnungen von Planetenrädern ausführbar ist. Hierzu bildet abhängig von der Drehrichtung des Planetenträgers ein jeweiliger Schaufelbereich eine Förderzelle, in welcher das Öl aufgenommen ist. Axial beidseitig ist diese Förderzelle begrenzt durch die beiden Wangen. Insbesondere begrenzt die erste Wange am ersten Ende der Förderzelle und die zweite Wange am anderen axialen Ende der Förderzelle die Förderzelle. Tragwand und Schaufelbereich müssen allerdings am jeweiligen Stegbereich nach radial innen ausgeformt werden, wozu hierzu beim Gießen des Planetenträgers geeignetes Formwerkzeug und Schieber bereitzustellen sind. Somit sind die Schaufelbereiche radial beabstandet von den Stegbereichen, wobei die Schaufelbereiche radial innerhalb der Stegbereiche angeordnet sind.

Mittels der Fördermittel ist eine verbesserte Schmierung erreicht. Somit ist ein effizienterer Betrieb ausführbar, insbesondere sind höhere Drehzahlen bei geringeren Verlusten erreichbar. Zusätzlich trägt hierzu auch eine massenreduzierte und somit trägheitsmomentreduzierte Ausführung des Planetenträgers bei, was auch zu einer effizienteren Betriebsweise bei dynamischem Betrieb des Getriebes führt.

Der Planetenträger ist drehbar gelagert in einem Gehäuseteil, das mit einem innenverzahnten Hohlrad drehfest verbunden ist. Die über Planetenbolzen im Planetenträger drehbar gelagert aufgenommenen Planetenräderverzahnungen sind einerseits mit der Innenverzahnung des Hohlrads und andererseits mit der Verzahnung der Sonnenradwelle oder eines Sonnenrades im Eingriff.

Somit zielt die Erfindung also auf einen zweiwangigen Planetenträger für eine Planetengetriebestufe eines Getriebes, wobei an der radialen Innenseite der die Wangen verbindenden Stegbereiche Schaufeln zur Ölförderung angeordnet sind. **Erfindungsgemäß** ist das Fördermittel in Umfangsrichtung beziehungsweise entgegen der Umfangsrichtung spiegelsymmetrisch zu einer mittig durch die Tragwand durchgehenden Radialebene ausgeformt,

insbesondere wobei die Radialebene nur einen einzigen Umfangswinkel aufweist, also die Radialebene diejenige Ebene ist, welche den einzigen Umfangswinkel aufweist und sich somit nur radial und axial erstreckt. Von Vorteil ist dabei, dass drehrichtungsunabhängig die Schmierung gleich effektiv ausführbar ist.

Bei einer vorteilhaften Ausgestaltung erstreckt sich die jeweilige Tragwand von der ersten Wange bis zur zweiten Wange,
wobei die jeweiligen Schaufelbereiche sich ebenfalls von der ersten Wange bis zur zweiten Wange erstrecken,
insbesondere so dass aus Tragwand und Schaufelbereichen eine Förderzelle gebildet ist. Von Vorteil ist dabei, dass eine erhöhte Stabilität erreichbar ist und ein Abfließen von in den Schaufeln oder in dem Fördermittel aufgenommenem Öl verhinderbar ist.

Bei einer vorteilhaften Ausgestaltung weist die Tragwand eine in Umfangsrichtung durchgehende Ausnehmung, insbesondere Loch, insbesondere Bohrloch, auf. Von Vorteil ist dabei, dass nicht nur eine Schmierung aus der in Drehrichtung vorne liegenden Zelle oder Schaufel, sondern auch aus der in Drehrichtung hinteren Zelle oder Schaufel ausführbar ist. Somit sind sogar zwei verschiedene Verzahnungsteile von demselben Fördermittel mit Öl beaufschlagbar, insbesondere also schmierbar.

Bei einer vorteilhaften Ausgestaltung steigt der Radialabstand des jeweiligen Schaufelbereichs mit zunehmendem, insbesondere in Umfangsrichtung gemessenen, Abstand zur Tragwand, monoton an. Von Vorteil ist dabei, dass ein verbessertes Aufnehmen von Öl und ein vermindertes Abfließen von Öl erreichbar ist

Bei einer vorteilhaften Ausgestaltung ist in die insbesondere äußere Stirnseite der zweiten Wange eine strahlenförmige Vertiefung eingeformt,
wobei die strahlenförmige Vertiefung radial sich erstreckende Kanäle aufweist,
wobei jeder Kanal mit zunehmendem Radialabstand verjüngt ausgeführt ist, insbesondere also mit monoton abnehmender Breite in Umfangsrichtung ausgeführt ist,
insbesondere wobei die Kanäle voneinander regelmäßig beabstandet sind,
insbesondere wobei die Kanäle sich jeweils bis zum radial äußeren Rand des Planetenträgers erstrecken. Von Vorteil ist dabei, dass eine verringerte Masse bei ausreichender Stabilität und Steifigkeit der zweiten Wange erreichbar ist. Außerdem ist Öl von den Kanälen aus dem Ölsumpf bei der Drehbewegung des Planetenträgers mitführbar und somit nach radial außen, insbesondere auch in Folge der Zentrifugalkraft, förderbar. Das auf diese Weise mitgenommene und emporgehobene Öl fließt dann zumindest teilweise über den radial äußeren Rand des Planetenträgers den in Eingriff stehenden Verzahnungsteilen zu. Dabei fließt das Öl zumindest teilweise durch die in Umfangsrichtung zwischen den Stegbereichen ausgeformten Ausnehmungen des Planetenträgers, also in den Raumbereich der Planetenräder.

Bei einer vorteilhaften Ausgestaltung sind an der Außenkante der ersten Wange, insbesondere an der Außenkante der Stirnseite der ersten Wange, Ausnehmungen ausgeformt,
wobei der von den Ausnehmungen jeweils überdeckte Umfangswinkelbereich von dem von einem jeweiligen Stegbereich überdeckten Umfangswinkelbereich umfasst ist,
insbesondere wobei die Ausnehmungen in Umfangsrichtung voneinander und/oder von den Stegbereichen regelmäßig beabstandet sind. Von Vorteil ist dabei, dass die Masse des Planetenträgers verringert ist.

Bei einer vorteilhaften Ausgestaltung sind an der der zweiten Wange zugewandten Innenkante der ersten Wange, insbesondere an der Innenkante der Stirnseite der ersten Wange, Ausnehmungen ausgeformt, insbesondere zur Erleichterung der Demontage der Planetenräder, wobei der von den Ausnehmungen jeweils überdeckte Umfangswinkelbereich von dem von einem jeweiligen Stegbereich überdeckten Umfangswinkelbereich beabstandet ist,
insbesondere wobei die Ausnehmungen in Umfangsrichtung voneinander und/oder von den Stegbereichen regelmäßig beabstandet sind. Von Vorteil ist dabei, dass die Masse des Planetenträgers verringert ist und außerdem mit einem in die Ausnehmung eingreifenden Werkzeug eine vereinfachte Demontage der Planetenräder ermöglicht ist.

Bei einer vorteilhaften Ausgestaltung sind an der von der ersten Wange abgewandten Außenkante der zweiten Wange, insbesondere an der Außenkante der Stirnseite der zweiten Wange, Ausnehmungen ausgeformt,
wobei der von den Ausnehmungen jeweils überdeckte Umfangswinkelbereich von dem von einem jeweiligen Stegbereich überdeckten Umfangswinkelbereich beabstandet ist,
insbesondere wobei die jeweiligen Ausnehmungen in Umfangsrichtung voneinander und/oder von den Stegbereichen regelmäßig beabstandet sind. Von Vorteil ist dabei, dass die Masse des Planetenträgers verringert ist.

Bei einer vorteilhaften Ausgestaltung ist die erste Wange und die zweite Wange jeweils scheibenartig, insbesondere kreisscheibenartig, ausgeformt. Von Vorteil ist dabei, dass eine einfache Herstellung ermöglicht ist.

Bei einer vorteilhaften Ausgestaltung ist zentrisch zur strahlenförmigen Vertiefung eine Bohrung zur Durchführung der Sonnenradwelle angeordnet. Von Vorteil ist dabei, dass die Kanäle der strahlenförmigen Vertiefung in die Bohrung münden, da diese mittig in der zweiten Wange angeordnet ist. Somit ist ein Ölkreislauf ausbildbar, da das von der strahlenförmigen Vertiefung radial geförderte Öl über die Verzahnung zurückfließt in den Bereich der Bohrung und dort durch die zweite Wange heraus in die strahlenförmige Vertiefung.

Bei einer vorteilhaften Ausgestaltung ist ein weiterer Planetenträger axial benachbart und beabstandet zur strahlenförmigen Vertiefung angeordnet, wobei der Abstand kleiner ist als die in axialer Richtung gemessene Tiefe der strahlenförmigen Vertiefung in der Stirnseite der zweiten Wange. Von Vorteil ist dabei, dass wegen des geringen Abstandes schon bei niedrigen Drehzahlen erhebliche Mengen an Öl aus dem Ölsumpf mitbewegt werden und somit emporgehoben werden, um dann eine Schmierung von oberhalb des Ölsumpfes befindlichen Bereichen der Verzahnungen der Verzahnungsteile zu bewirken.

Bei einer vorteilhaften Ausgestaltung sind die Ausnehmungen auf einem größeren Radialabstand angeordnet als die Bohrungen zur Aufnahme der Planetenbolzen in der ersten und zweiten Wange. Von Vorteil ist dabei, dass nicht nur die Masse, sondern auch das Trägheitsmoment des Planetenträgers erheblich reduziert wird. Außerdem sind die Ausnehmungen auch zum Auswuchten des Planetenträgers verwendbar.

Bei einer vorteilhaften Ausgestaltung ist
- der von den Schaufelbereichen überdeckte Radialabstandsbereich unterhalb bis zum Radialabstand der Drehachse des oder jedes Planetenrads angeordnet
- oder der von den Schaufelbereichen überdeckte Radialabstandsbereich umfasst den Radialabstand der Drehachse des oder jedes Planetenrads.

Von Vorteil ist dabei die verbesserte Schmierung. Somit wird bei der Drehbewegung ein vorzeitiges Entleeren der Schaufel vermeidbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine Schrägansicht eines Planetenträgers 10 eines erfindungsgemäßen Getriebes dargestellt.
In der Figur 2 ist ein zugehöriger Querschnitt dargestellt.
In der Figur 3 ist ein zugehöriger Längsschnitt dargestellt.

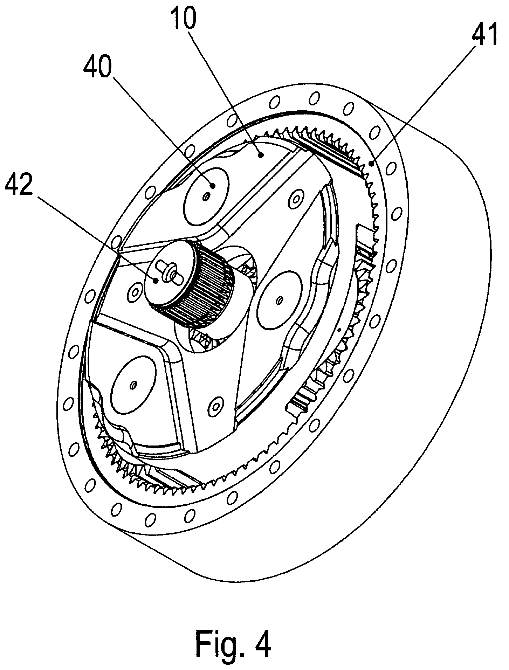

In der Figur 4 ist eine den Planetenträger 10 aufweisende Planetengetriebestufe des Getriebes dargestellt.
In der Figur 5 ist eine vorgelagerte Planetengetriebestufe des Getriebes dargestellt.

Wie in den Figuren dargestellt, weist das erfindungsgemäße Getriebe eine Planetengetriebestufe auf, der insbesondere eine weitere Planetengetriebestufe vorgelagert ist.

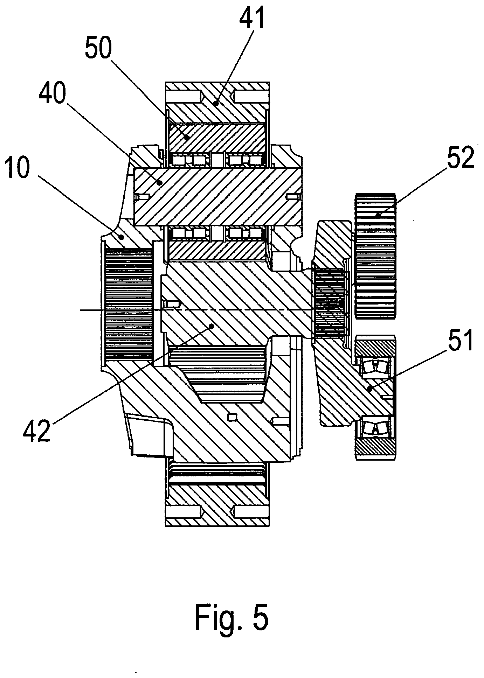

Wie in Figur 5 dargestellt, werden bei einer vorgelagerten Planetengetriebestufe weitere Planetenräder 52 von einem nicht dargestellten Sonnenrad angetrieben.

Die weiteren Planetenräder 52 sind auf Planetenbolzen gelagert, die in einem weiteren Planetenträger 51 aufgenommen sind, der mit einer Sonnenradwelle 42 verbunden ist.

Diese Sonnenradwelle 42 weist an ihrem axialen Endbereich eine Verzahnung, insbesondere Steckverzahnung, auf, welche in eine Bohrung des weiteren Planetenträgers 51 eingesteckt ist. Somit ist die Sonnenradwelle 42 drehfest verbunden mit dem weiteren Planetenträger 51, von dem sie antreibbar ist.

Die Sonnenradwelle 42 weist eine Verzahnung auf, insbesondere eine Sonnenverzahnung, welche im Eingriff ist mit den Verzahnungen von Planetenrädern 50. Jedes der Planetenräder ist auf einem Planetenbolzen 40 gelagert, welcher jeweils beidseitig in einem zweiwangigen Planetenträger 10 aufgenommen ist. Der jeweilige Planetenbolzen 40 ist jeweils gegen eine Stufe einer Stufenbohrung in der ersten Wange des Planetenträgers 10 angestellt und durch eine Bohrung in der anderen Wange des Planetenträgers 10 gesteckt.

Die Planetenräder 50 sind im Eingriff mit der Innenverzahnung eines Hohlrads 41.

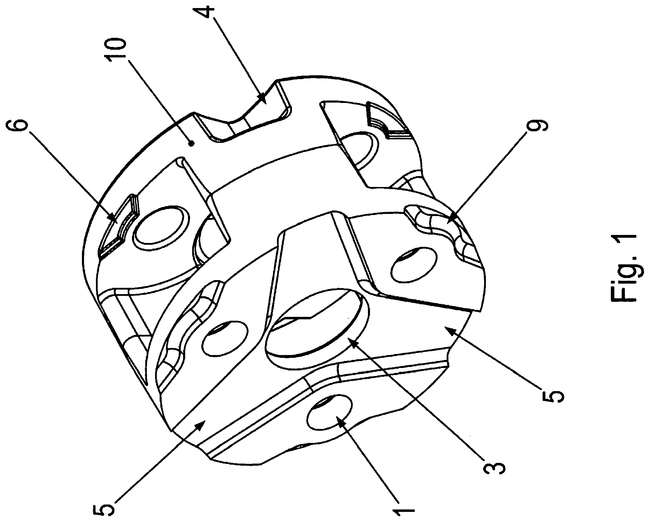

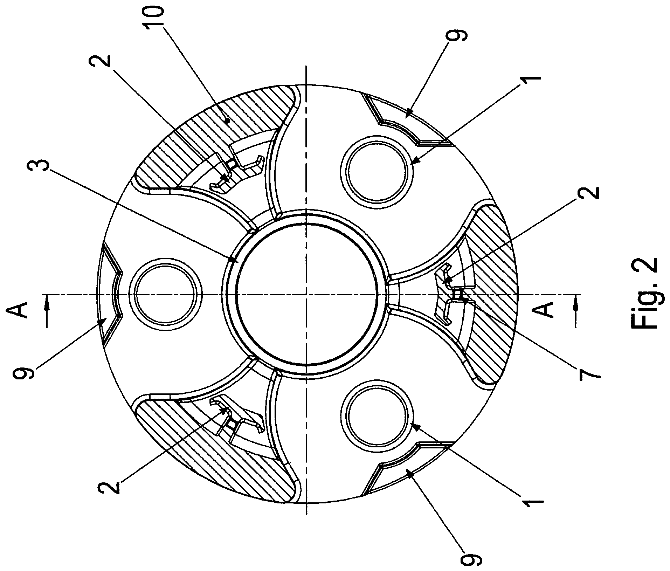

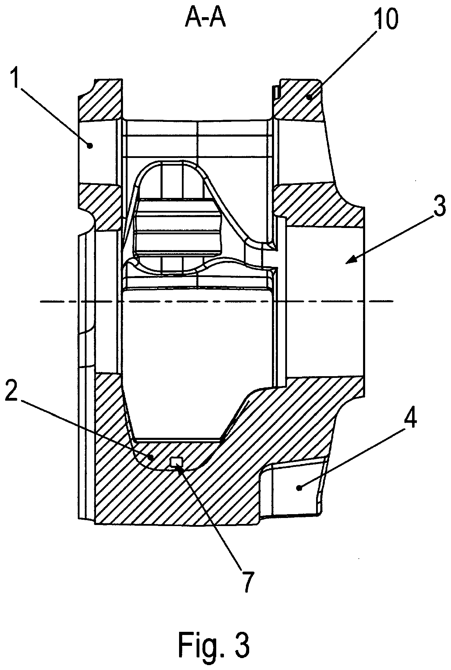

Der Planetenträger ist in den Figuren 1 bis 3 näher dargestellt. Dabei weist der Planetenträger 10 über drei, in Umfangsrichtung voneinander regelmäßig beabstandete Stegbereiche auf, welche die beiden Wangen des Planetenträgers verbinden. In Umfangsrichtung zwischen den jeweiligen Stegbereichen sind Bohrungen 1 für die Planetenbolzen 40 angeordnet.

Wie in den Figuren 1 bis 3 deutlich dargestellt, sind an der Innenseite der Stegbereiche Schaufeln angeordnet. Diese Schaufeln 2 sind in Umfangsrichtung regelmäßig voneinander beabstandet

Jede der Schaufeln 2 weist eine vom jeweiligen Stegbereich nach radial innen hervorragende Tragwand auf, an welcher jeweils ein jeweiliger erster Schaufelbereich angeformt ist, der in Umfangsrichtung von der Tragwand hervorragt, und ein jeweiliger zweiter Schaufelbereich, der entgegen der Umfangsrichtung von der Tragwand ausgehend hervorragt.

Die Tragwand weist jeweils ein in Umfangsrichtung durchgehendes Loch auf, insbesondere so, dass vom in Umfangrichtung vorderen Schaufelbereich Öl in den in Umfangsrichtung hinteren Schaufelbereich fließen kann.

Die Tragwand bildet also mit dem ersten Schaufelbereich eine Schaufel 2, welche bei Drehrichtung in Umfangsrichtung Öl aus dem Ölsumpf in eine größere Höhe fördert, dort entleert wird und somit eine Schmierung eines Planetenrads 50 bewirkt. Infolge des Lochs, insbesondere Bohrlochs, fließt aber auch etwas Öl schon während der Bewegung vom Ölsumpf nach oben in den anderen Schaufelbereich und von dort zudem tiefer gelegenen anderen Planetenrad 50.

Auf diese Weise werden also Planetenräder zusätzlich geschmiert mittels der Schaufeln 2.

Jede der Schaufeln 2 ist symmetrisch zur Tragwand ausgeformt, so dass eine drehrichtungsunabhängige Zusatzschmierung erreichbar ist.

Die beiden Schaufelbereiche sind radial beabstandet von den Stegbereichen.

Dabei sind die Schaufelbereiche jeweils auf dem selben Radialabstand angeordnet.

In in Umfangsrichtung von den Stegbereichen überdeckten Umfangswinkelbereichen sind Ausnehmungen 4 an der Außenkante der ersten Wange des Planetenträgers 10 angeordnet. Somit ist die Masse des Planetenträgers 10 reduziert und eine höhere Dynamik des Planetengetriebes verlustarm erreichbar.

Auch an einer zur zweiten Wange hin gerichteten Innenkante der ersten Wange ist jeweils im von dem jeweiligen Planetenrad 50 überdeckten Winkelbereich eine Ausnehmung 6 ausgeformt, so dass die Masse weiter reduziert ist.

Auch an einer von der ersten Wange abgewandten Außenkante der zweiten Wange ist jeweils im von dem jeweiligen Planetenrad 50 überdeckten Winkelbereich eine Ausnehmung 9 ausgeformt, so dass die Masse weiter reduziert ist.

In die Stirnseite der zweiten Wange ist eine strahlenförmige, zur Drehachse des Planetenträgers 10 diskret drehsymmetrische Vertiefung eingebracht. Hierzu sind drei in die Stirnseite vertieft eingebrachte Kanäle 5 vorgesehen, welche jeweils gleichartig ausgeformt sind und in Umfangsrichtung regelmäßig voneinander beabstandet sind. Diese Kanäle 5 münden in demjenigen Bereich ineinander, in welchem die Bohrung 3 zur Durchführung der Sonnenradwelle 42 angeordnet ist.

Jeder der Kanäle 5 ist mit zunehmendem Radialabstand zur Drehachse des Planetenträgers 10 zunehmend verjüngt, insbesondere also enger, ausgeführt.

Die so gebildete strahlenförmige Vertiefung fördert bei Drehbewegung des Planetenträgers 10 ebenfalls Öl nach oben. Denn die strahlenförmige Vertiefung taucht mit einem jeweiligen Kanal 5 in den Ölsumpf ein und fördert somit bei Drehbewegung des Planetenträgers 10 im Kanal 5 aufgenommenes Öl zumindest teilweise nach oben. Wegen der nach radial außen zunehmenden Verjüngung und der wirkenden Zentrifugalkraft wird anhaftendes Öl mit hoher Geschwindigkeit nach außen transportiert und fließt dann in Umfangsrichtung zwischen den Stegbereichen, insbesondere über die Planetenräder, in den Ölsumpf zurück. Auf diese Weise werden die miteinander im Eingriff befindlichen Verzahnungen geschmiert.

Je geringer der axiale Abstand zu einem zum Planetenträger 10, insbesondere zur sternförmigen Vertiefung, axial nächsbenachbarten Teil, wie beispielsweise einem weiteren Planetenträger oder Gehäuseteil oder Flanschteil, wird die Ölförderung des Öls nach radial außen effektiver, da das Öl nicht nur in den Kanälen 5 durch Anhaften gehalten ist, sondern auch nicht schnell genug abfließen kann durch den axialen Abstandsbereich zwischen dem Planetenträger 10 und dem weiteren Planetenträger.

Vorzugsweise erstreckt sich der von den Schaufelbereichen überdeckte, auf die Drehachse des Planetenträgers bezogene Radialabstandsbereich bis zum auf die Drehachse des Planetenträgers bezogenen Radialabstand des oder jedes Planetenrads oder ist radial innerhalb des auf die Drehachse des Planetenträgers bezogenen Radialabstands der Drehachse des oder jedes Planetenrads angeordnet.

Besonders bevorzugt umfasst sogar der von den Schaufelbereichen überdeckte, auf die Drehachse des Planetenträgers bezogene Radialabstandsbereich den auf die Drehachse des Planetenträgers bezogenen Radialabstand der Drehachse des oder jedes Planetenrads. Somit ist ein Schmieren der radial äußeren Hälfte der Planetenradverzahnung ermöglicht. Da beim Herausfließen des von der Schaufel geförderten Öls die Drehstellung des Planetenträgers in etwa derart ist, dass die Schaufel in einem hohen Bereich ihrer Bahnbewegung sich befindet und die Verzahnung des Planetenrads dann das aus der Schaufel ausfließende Öl noch etwas mitfördert, erreicht das Öl den gesamten äußeren Umfang des Planetenrads insbesondere mit hoher Effizienz.

Bei weiteren erfindungsgemäßen Ausführungsbeispielen wird die sternförmige Vertiefung statt mit drei mit mehr als drei Kanälen 5 ausgeführt, die aber wiederum in Umfangsrichtung voneinander vorzugsweise regelmäßig beabstandet sind.

### Bezugszeichenliste

1 Bohrung für Planetenbolzen
2 Schaufel
3 Bohrung für Sonnenradwelle
4 Ausnehmung
5 Kanal
6 Ausnehmung
7 Durchgehende Ausnehmung
9 Ausnehmung
10 Planetenträger
40 Planetenbolzen
41 Hohlrad mit Innenverzahnung
42 Sonnenradwelle mit Steckverzahnung
50 Planetenrad
51 weiterer Planetenträger
52 weiteres Planetenrad

## Patentansprüche

1. Getriebe mit zumindest einer Planetengetriebestufe,
wobei die Planetengetriebestufe einen zweiwangigen Planetenträger (10) aufweist,
wobei die erste Wange des Planetenträgers (10) mit der zweiten Wange des Planetenträgers (10) mittels Stegbereichen verbunden ist,
wobei die erste und die zweite Wange voneinander axial, also parallel zur Drehachsrichtung des Planetenträgers (10), beabstandet sind,
wobei die Stegbereiche in Umfangsrichtung voneinander regelmäßig beabstandet sind,
**wobei** in dem in Umfangsrichtung von einem jeweiligen Stegbereich überdeckten jeweiligen Winkelbereich jeweils ein Fördermittel (2), insbesondere für Öl, insbesondere eine Förderzelle für Öl, angeordnet ist, insbesondere am jeweiligen Stegbereich nach radial innen hervorragend, insbesondere am jeweiligen Stegbereich, angeformt ist,
**dadurch gekennzeichnet, dass**
**das jeweilige Fördermittel eine jeweilige Tragwand und jeweilige Schaufelbereiche aufweist,**
**wobei die jeweilige Tragwand an einen der Stegbereiche angeformt ist und sich ausgehend vom Stegbereich nach radial innen erstreckt,**
wobei
**die jeweiligen Schaufelbereiche beabstandet sind vom jeweiligen Stegbereich und an die Tragwand angeformt sind, wobei sich ein erster Schaufelbereich des jeweiligen Fördermittels in Umfangsrichtung erstreckt, insbesondere auskragt, und ein zweiter Schaufelbereich des jeweiligen Fördermittels entgegen der Umfangsrichtung sich erstreckt, insbesondere auskragt,**
wobei das Fördermittel in Umfangsrichtung beziehungsweise entgegen der Umfangsrichtung spiegelsymmetrisch zu einer mittig durch die Tragwand durchgehenden Radialebene ausgeformt ist.

2. Getriebe nach Anspruch 1,
**dadurch gekennzeichnet, dass**
**die Radialebene nur einen einzigen Umfangswinkel aufweist, also sich nur axial und radial erstreckt, nicht aber in Umfangsrichtung.**

3. Getriebe nach einem der Ansprüche **1 bis 2**,
**dadurch gekennzeichnet, dass**
die jeweilige Tragwand von der ersten Wange sich bis zur zweiten Wange erstreckt,
wobei die jeweiligen Schaufelbereiche sich ebenfalls von der ersten Wange bis zur zweiten Wange erstrecken,
so, dass aus Tragwand und Schaufelbereichen eine Förderzelle gebildet ist.

4. Getriebe nach einem der Ansprüche 1 bis 3,
**dadurch gekennzeichnet, dass**
die Tragwand eine in Umfangsrichtung durchgehende Ausnehmung, insbesondere Bohrloch, aufweist.

5. Getriebe nach einem der vorangegangenen Ansprüche,
**dadurch gekennzeichnet, dass**
der auf die Drehachse des Planetenträgers (10) bezogene Radialabstand des jeweiligen Schaufelbereichs mit zunehmendem, in Umfangsrichtung gemessenen, Abstand zur Tragwand monoton ansteigt.

6. Getriebe nach einem der vorangegangenen Ansprüche,
**dadurch gekennzeichnet, dass**
in die Stirnseite der zweiten Wange eine strahlenförmige Vertiefung eingeformt ist,
wobei die strahlenförmige Vertiefung radial sich erstreckende Kanäle aufweist,
wobei jeder Kanal (5) mit zunehmendem Radialabstand verjüngt ausgeführt ist,
wobei die Kanäle sich jeweils bis zum radial äußeren Rand des Planetenträgers (10) erstrecken.

7. Getriebe nach einem der vorangegangenen Ansprüche,
**dadurch gekennzeichnet, dass**
an der Außenkante an der Außenkante der Stirnseite der ersten Wange Ausnehmungen ausgeformt sind,
wobei der von den Ausnehmungen jeweils überdeckte Umfangswinkelbereich von dem von einem jeweiligen Stegbereich überdeckten Umfangswinkelbereich umfasst ist,

8. Getriebe nach einem der vorangegangenen Ansprüche,
**dadurch gekennzeichnet, dass**
an der der zweiten Wange zugewandten Innenkante der ersten Wange, Ausnehmungen ausgeformt sind
wobei der von den Ausnehmungen jeweils überdeckte Umfangswinkelbereich von dem von einem jeweiligen Stegbereich überdeckten Umfangswinkelbereich beabstandet ist,

9. Getriebe nach einem der vorangegangenen Ansprüche,
**dadurch gekennzeichnet, dass**
an der von der ersten Wange abgewandten Außenkante der zweiten Wange, Ausnehmungen ausgeformt sind,
wobei der von den Ausnehmungen jeweils überdeckte Umfangswinkelbereich von dem von einem jeweiligen Stegbereich überdeckten Umfangswinkelbereich beabstandet ist,

10. Getriebe nach einem der vorangegangenen Ansprüche,
**dadurch gekennzeichnet, dass**
die erste Wange und die zweite Wange jeweils scheibenartig, , ausgeformt ist.

11. Getriebe nach einem der Ansprüche 1 bis 9,
**dadurch gekennzeichnet, dass**
zentrisch zur strahlenförmigen Vertiefung eine Bohrung (3) zur Durchführung der Sonnenradwelle (42) angeordnet ist.

12. Getriebe nach einem der Ansprüche 1 bis 11,
**dadurch gekennzeichnet, dass**
ein weiterer Planetenträger (10) axial benachbart und beabstandet zur strahlenförmigen Vertiefung angeordnet ist, wobei der Abstand kleiner ist als die in axialer Richtung gemessene Tiefe der strahlenförmigen Vertiefung in der Stirnseite der zweiten Wange.

13. Getriebe nach einem der Ansprüche 1 bis 12,
**dadurch gekennzeichnet, dass**
die Ausnehmungen auf einem größeren Radialabstand angeordnet sind als die Bohrungen (1) zur Aufnahme der Planetenbolzen (40) in der ersten und zweiten Wange.

14. Getriebe nach einem der Ansprüche 1 bis 13,
**dadurch gekennzeichnet, dass**
- der von den Schaufelbereichen überdeckte, auf die Drehachse des Planetenträgers (10) bezogene Radialabstandsbereich entweder sich bis zum Radialabstand der Drehachse des oder jedes Planetenrads (50) erstreckt oder radial innerhalb des Radialabstands der Drehachse des oder jedes Planetentrades (50) angeordnet ist
- oder dass der von den Schaufelbereichen überdeckte, auf die Drehachse des Planetenträgers (10) bezogene Radialabstandsbereich den Radialabstand der Drehachse des oder jedes Planetenrads (50) umfasst.

## Claims

1. A gear unit having at least one planetary gear stage,
wherein the planetary gear stage has a pinion cage (10) with two side pieces,
wherein the first side piece of the pinion cage (10) is connected to the second side piece of the pinion cage (10) by means of land regions,
wherein the first and the second side piece are spaced apart axially, i.e. parallel to the direction of the axis of rotation of the pinion cage (10), from each other,
wherein the land regions are spaced apart regularly from each other in the circumferential direction,
wherein in the respective angular range covered in the circumferential direction by a respective land region in each case a conveying means (2), in particular for oil, in particular a conveying cell for oil, is arranged, in particular formed on the respective land region and projecting radially inwards, in particular on the respective land region,
**characterised in that**
the respective conveying means has a respective supporting wall and respective scoop regions,
the respective supporting wall being formed onto one of the land regions and extending radially inwards starting from the land region,
with the respective scoop regions being spaced apart from the respective land region and being formed onto the supporting wall, with a first scoop region of the respective conveying means extending, in particular protruding, in the circumferential direction, and a second scoop region of the respective conveying means extending, in particular protruding, counter to the circumferential direction,
the conveying means in the circumferential direction or counter to the circumferential direction being formed mirror-symmetrically to a radial plane passing centrally through the supporting wall.

2. A gear unit according to claim 1,
**characterised in that**
the radial plane has only a single angle at circumference, i.e. extends only axially and radially, but not in the circumferential direction.

3. A gear unit according to one of claims 1 to 2,
**characterised in that**
the respective supporting wall extends from the first side piece up to the second side piece,
the respective scoop regions likewise extending from the first side piece up to the second side piece,
such that a conveying cell is formed from the supporting wall and scoop regions.

4. A gear unit according to one of claims 1 to 3,
**characterised in that**
the supporting wall has a cutout, in particular drilled hole, which is continuous in the circumferential direction.

5. A gear unit according to one of the preceding claims,
**characterised in that**
the radial distance of the respective scoop region relative to the axis of rotation of the pinion cage (10) increases monotonically with increasing distance, measured in the circumferential direction, from the supporting wall.

6. A gear unit according to one of the preceding claims,
**characterised in that**
a radiate depression is formed in the end face of the second side piece,
the radiate depression having radially extending ducts,
each duct (5) being embodied tapered with increasing radial distance,
the ducts extending in each case up to the radially outer edge of the pinion cage (10).

7. A gear unit according to one of the preceding claims,
**characterised in that**
cutouts are formed on the outer edge on the outer edge of the end face of the first side piece,
with the angle-at-circumference region covered in each case by the cutouts being encompassed by the angle-at-circumference region covered by a respective land region.

8. A gear unit according to one of the preceding claims,
**characterised in that**
cutouts are formed on the inner edge, facing the second side piece, of the first side piece,
with the angle-at-circumference region covered in each case by the cutouts being spaced apart from the angle-at-circumference region covered by a respective land region.

9. A gear unit according to one of the preceding claims,
**characterised in that**
cutouts are formed on the outer edge, facing away from the first side piece, of the second side piece,
with the angle-at-circumference region covered in each case by the cutouts being spaced apart from the angle-at-circumference region covered by a respective land region.

10. A gear unit according to one of the preceding claims,
**characterised in that**
the first side piece and the second side piece in each case are formed in the manner of a disc.

11. A gear unit according to one of claims 1 to 9,
**characterised in that**
a bore (3) for the sun gear shaft (42) to be passed through is arranged centrically to the radiate depression.

12. A gear unit according to one of claims 1 to 11,
**characterised in that**
a further pinion cage (10) is arranged axially adjacent to and spaced apart from the radiate depression, the spacing being smaller than the depth, measured in the axial direction, of the radiate depression in the end face of the second side piece.

13. A gear unit according to one of claims 1 to 12,
**characterised in that**
the cutouts are arranged at a greater radial distance than the bores (1) for receiving the planet pins (40) in the first and second side piece.

14. A gear unit according to one of claims 1 to 13,
**characterised in that**
- the radial distance region relative to the axis of rotation of the pinion cage (10) and covered by the scoop regions either extends up to the radial distance of the axis of rotation of the or each planet wheel (50) or is arranged radially within the radial distance of the axis of rotation of the or each planet wheel (50),
- or **in that** the radial distance region relative to the axis of rotation of the pinion cage (10) and covered by the scoop regions encompasses the radial distance of the axis of rotation of the or each planet wheel (50).

## Revendications

1. Transmission équipée d'au moins un étage d'engrenage planétaire,
lequel étage d'engrenage planétaire est doté d'un porte-satellites (10) à deux flasques,
le premier flasque du porte-satellites (10) étant relié au second flasque dudit porte-satellites (10) au moyen de zones d'entretoisement,
lesdits premier et second flasques étant espacés l'un de l'autre dans le sens axial, c'est-à-dire parallèlement à la direction de l'axe de rotation du porte-satellites (10),
lesdites zones d'entretoisement étant mutuellement espacées de façon régulière dans la direction périphérique,
sachant qu'un moyen convoyeur (2) notamment dédié à de l'huile, en particulier une cellule de convoyage d'huile, est disposé(e) à chaque fois dans la plage angulaire considérée couverte par une zone d'entretoisement respective, dans la direction périphérique, et est en particulier ménagé(e) sur ladite zone d'entretoisement respective en faisant notamment saillie vers l'intérieur, dans le sens radial, sur ladite zone d'entretoisement respective,
**caractérisée par le fait que**
le moyen convoyeur considéré comprend une paroi respective de support et des zones respectives à ailettes,
sachant que la paroi respective de support est ménagée sur l'une des zones d'entretoisement et s'étend vers l'intérieur, dans le sens radial, à partir de ladite zone d'entretoisement,
les zones respectives à ailettes étant espacées de la zone d'entretoisement considérée, et étant ménagées sur ladite paroi de support, sachant qu'une première zone à ailettes du moyen convoyeur considéré s'étend dans la direction périphérique, en particulier avec débordement, et qu'une seconde zone à ailettes dudit moyen convoyeur considéré s'étend en sens inverse de la direction périphérique, en particulier avec débordement,
lequel moyen convoyeur est ménagé, respectivement dans la direction périphérique ou en sens inverse de ladite direction périphérique, avec symétrie spéculaire par rapport à un plan radial passant par le centre de la paroi de support.

2. Transmission selon la revendication 1,
**caractérisée par le fait que**
le plan radial présente un seul et unique angle périphérique, c'est-à-dire qu'il s'étend uniquement dans les directions axiale et radiale, mais toutefois pas dans la direction périphérique.

3. Transmission selon l'une des revendications 1 à 2,
**caractérisée par le fait que**
la paroi de support considérée s'étend jusqu'au second flasque, à partir du premier flasque,
les zones respectives à ailettes s'étendant, pareillement, jusqu'audit second flasque à partir dudit premier flasque,
de sorte que ladite paroi de support et lesdites zones à ailettes donnent naissance à une cellule de convoyage.

4. Transmission selon l'une des revendications 1 à 3,
**caractérisée par le fait que**
la paroi de support présente un évidement, en particulier un trou foré ininterrompu dans la direction périphérique.

5. Transmission selon l'une des revendications précédentes,
**caractérisée par le fait que**
l'espacement radial de la zone à ailettes considérée, vis-à-vis de l'axe de rotation du porte-satellites (10), croît de manière monotone au fur et à mesure de l'accroissement de l'espacement vis-à-vis de la paroi de support, mesuré dans la direction périphérique.

6. Transmission selon l'une des revendications précédentes,
**caractérisée par le fait**
**qu'**un renfoncement de configuration rayonnée est pratiqué dans la face extrême du second flasque,
ledit renfoncement de configuration rayonnée étant pourvu de canaux s'étendant dans le sens radial,
sachant que chaque canal (5) est de réalisation s'amenuisant au fur et à mesure de l'accroissement de l'espacement radial,
lesdits canaux s'étendant, à chaque fois, jusqu'au bord radialement extérieur du porte-satellites (10).

7. Transmission selon l'une des revendications précédentes,
**caractérisée par le fait que**
des évidements sont ménagés au niveau de l'arête extérieure de la face extrême du premier flasque,
sachant que la plage d'angles périphériques, respectivement couverte par lesdits évidements, est englobée par la plage d'angles périphériques couverte par une zone d'entretoisement considérée.

8. Transmission selon l'une des revendications précédentes,
**caractérisée par le fait que**
des évidements sont ménagés au niveau de l'arête intérieure du premier flasque qui pointe vers le second flasque,
sachant que la plage d'angles périphériques, respectivement couverte par lesdits évidements, est située à distance de la plage d'angles périphériques couverte par une zone d'entretoisement considérée.

9. Transmission selon l'une des revendications précédentes,
**caractérisée par le fait que**
des évidements sont ménagés au niveau de l'arête extérieure du second flasque qui pointe à l'opposé du premier flasque,
sachant que la plage d'angles périphériques, respectivement couverte par lesdits évidements, est située à distance de la plage d'angles périphériques couverte par une zone d'entretoisement considérée.

10. Transmission selon l'une des revendications précédentes,
**caractérisée par le fait que**
le premier flasque et le second flasque présentent des configurations respectives de type discoïdal.

11. Transmission selon l'une des revendications 1 à 9,
**caractérisée par le fait**
**qu'**un alésage (3), dévolu au passage traversant de l'arbre (42) de la roue planétaire, est disposé centralement par rapport au renfoncement de configuration rayonnée.

12. Transmission selon l'une des revendications 1 à 11,
**caractérisée par le fait**
**qu'**un porte-satellites (10) supplémentaire est disposé, dans le sens axial, au voisinage et à distance du renfoncement de configuration rayonnée, l'espacement étant plus petit que la profondeur, mesurée axialement, dudit renfoncement de configuration rayonnée dans la face extrême du second flasque.

13. Transmission selon l'une des revendications 1 à 12,
**caractérisée par le fait que**
les évidements sont agencés avec un espacement radial plus grand que celui des perçages (1) dévolus à la réception des boulons planétaires (40) dans les premier et second flasques.

14. Transmission selon l'une des revendications 1 à 13,
**caractérisée par le fait que**
- la plage d'espacements radiaux par rapport à l'axe de rotation du porte-satellites (10), couverte par les zones d'entretoisement, s'étend jusqu'à l'espacement radial de l'axe de rotation du, ou de chaque pignon satellite (50), ou bien est située radialement à l'intérieur dudit espacement radial de l'axe de rotation du, ou de chaque pignon satellite (50) ;
- ou **par le fait que** ladite plage d'espacements radiaux par rapport audit axe de rotation du porte-satellites (10), couverte par lesdites zones d'entretoisement, englobe ledit espacement radial de l'axe de rotation du, ou de chaque pignon satellite (50).
